## Europäisches Patentamt
## European Patent Office
## Office européen des brevets

(11) Veröffentlichungsnummer: **0 093 339**
**B1**

(12)
# EUROPÄISCHE PATENTSCHRIFT

(45) Veröffentlichungstag der Patentschrift:
29.10.86

(21) Anmeldenummer: 83103909.4

(22) Anmeldetag: **21.04.83**

(51) Int. Cl.⁴: **C 10 G 1/08, C 01 F 7/00**

(54) **Verfahren zum Behandeln von Rotschlamm.**

(30) Priorität: **28.04.82 DE 3215727**

(43) Veröffentlichungstag der Anmeldung:
**09.11.83 Patentblatt 83/45**

(45) Bekanntmachung des Hinweises auf die Patenterteilung:
**29.10.86 Patentblatt 86/44**

(84) Benannte Vertragsstaaten:
**DE GB IT**

(56) Entgegenhaltungen:
**US - A - 3 776 717**
**US - A - 4 038 172**

(73) Patentinhaber: **Rheinische Braunkohlenwerke AG.,
Stüttgenweg 2, D-5000 Köln 41 (DE)**

(72) Erfinder: **Ritter, Günter, Dr., Goethestrasse 29,
D-5040 Brühl (DE)**
Erfinder: **Lenz, Uwe, Dr., Heideweg 7, D-5020 Frechen
(DE)**
Erfinder: **Lazik, Paul, Schmiedegasse 34,
D-5000 Köln 60 (DE)**

(74) Vertreter: **Koepsell, Helmut, Dipl.-Ing., Mittelstrasse 7,
D-5000 Köln 1 (DE)**

ACTORUM AG

## Beschreibung

Die Erfindung betrifft ein Verfahren zum Behandeln von Rotschlamm mit trocknenden Substanzen zum Zwecke der weiteren Verwendung des Rotschlammes.

Gemäss US-A-4 038 172 ist eine Mischung aus Rotschlamm und Kohle, die zur Kohlehydrierung verwendet wird, bekannt.

Rotschlamm ist ein Abfallprodukt, welches bei der Aluminiumherstellung entsteht. Der Ausgangstoff Bauxit, der u.a. Eisen und Aluminiumoxid enthält, wird mit Natronlauge oder Soda bei erhöhten Temperaturen aufgeschlossen. Im Verlaufe des Prozesses geht Aluminium in Lösung, während das Eisenoxid ($Fe_2O_3$; $Fe_3O_4$) und die anderen vorhandenen Feststoffe fein verteilt in einer alkalischen wässrigen Suspension verbleiben. Diese Suspension wird bei Temperaturen um 70° C vorzugsweise auf einem Trommelfilter filtriert. Hierbei setzt sich der Rotschlamm auf dem Filtertuch der Trommel ab, von dem er abgestreift wird. Im allgemeinen ist die Anordnung so getroffen, dass der Rotschlamm in eine unter dem Trommelfilter befindliche Sammelrinne fällt, die mit Wasser durchspült wird, so dass der Rotschlamm eine weitere Verdünnung erfährt und über Pipelines zur Halde gefördert werden kann. Normalerweise wird der Rotschlamm als Abfall behandelt. – Es gibt für den Rotschlamm allerdings auch begrenzte Verwendungsmöglichkeiten, z.B. als Katalysator bei der Kohlehydrierung. Letztere erfordert die Anwesenheit von Katalysatoren zur Beschleunigung der Hydrierreaktion. Jedoch sind der Verwendung von Rotschlamm bisher Grenzen gesetzt. Dies ist im wesentlichen auf dessen sehr schlechte Handhabbarkeit zurückzuführen. Einmal stellt der Rotschlamm ein schmieriges Produkt dar, wobei insbesondere in Abhängigkeit von Transport und Handhabungsbedingungen zudem die Gefahr besteht, dass eine weitere Verdichtung der Feststoffsubstanz eintritt, und zwar auch im Sinne einer teilweisen Trennung der festen von der flüssigen Phase mit dem Ergebnis, dass sich eine alkalisch wässrige Phase abscheidet. Dies erfordert besondere Massnahmen, um ein unkontrolliertes Herauslaufen z.B. aus dem Transportbehälter oder dgl. zu verhindern. Infolgedessen ist man auch dazu übergegangen, den Rotschlamm zu trocknen, bevor er der weiteren Verwendung zugeführt wird. Üblicherweise weist der Rotschlamm Wassergehalte zwischen 40 und 60% auf, die durch Zufuhr von Wärme entfernt werden können. Dies erfordert jedoch zusätzliche komplizierte Einrichtungen und ist zudem mit einem hohen Energieaufwand verbunden.

Der Erfindung liegt die Aufgabe zugrunde, Rotschlamm so zu behandeln, dass er leichter zu handhaben und zu transportieren ist. Dabei soll der Aufwand an Energie und aufbereitungstechnischen Einrichtungen möglichst gering gehalten werden. Die Verwendbarkeit des Rotschlammes soll dadurch keine oder zumindest keine wesentlichen Einschränkungen erfahren.

Zur Lösung dieser Aufgabe schlägt die Erfindung vor, den Rotschlamm mit einer zur Trocknung ausreichenden Menge feingemahlener Kohle, insbesondere Kohlenstaub und/oder feinstkörnigem Koks, zu vermischen. Besonders vorteilhaft ist es, die Zumischung des Kohlenstaubs unmittelbar nach dem Abscheiden des Rotschlammes vom Filter durchzuführen, da zu diesem Zeitpunkt der Rotschlamm eine für den Mischvorgang günstige schlammartige bis teigige, also verhältnismässig niedrigviskose Konsistenz aufweist. Mit abnehmender Temperatur ändert sich die Konsistenz dahingehend, dass der Rotschlamm wieder viskos wird und eine tonartige Konsistenz annimmt. Es hat sich gezeigt, dass der Rotschlamm bei der Behandlung mit Kohlenstaub seine schmierige Eigenschaften vollständig verliert und dass als Ergebnis ein leicht handhabbares, körniges Gemisch anfällt. Besonders vorteilhaft ist es, dass dieses Gemisch unter Verwendung von verhältnismässig einfachen, langsam laufenden Mischern hergestellt werden kann. Das resultierende Gemisch kann sogar über längere Zeit in Silos gelagert und auch pneumatisch gefördert werden.

Als besonders vorteilhaft hat sich die Verwendung von feinstköriger Braunkohle herausgestellt. Dies wird im wesentlichen darauf zurückzuführen sein, dass die Braunkohle aufgrund ihrer grossen inneren Oberfläche in der Lage ist, verhältnismässig gorsse Feuchtigkeitsmengen zu binden. Dies gilt auch, wenn der verwendete Kohlenstaub noch einen merklichen Wassergehalt, beispielsweise in der Grössenordnung von 10–15% aufweist. Das braunkohleneigene Wasser ist zumindest ganz überwiegend kolloidal gebunden, so dass es zur Geamtfeuchtigkeit des resultierenden Gemisches Rotschlamm-Braunkohlenstaub nichts oder nur wenig beiträgt. Es besteht somit keine Notwendigkeit, zum Zwecke des angestrebten Effektes die Braunkohle auf einen besonders geringen Wassergehalt zu trocknen. Es kann vielmehr für das erfindungsgemässe Verfahren eine bei der üblichen Handhabung und Verarbeitung von Braunkohle ohnehin vorhandene Braunkohlefraktion verwendet werden, wobei deren Restwassergehalt eher von der Mahlbarkeit – falls ein Mahlvorgang erforderlich sein sollte – als von der Feuchte des resultierenden Gemisches abhängig sein wird.

Die zur Trocknung des Rotschlamms erforderliche Menge an Kohlenstaub ist verhältnismässig gering. So hat sich herausgestellt, dass Rotschlamm mit Braunkohle im Verhältnis von 0,5–10 : 1 der Gewichte zufridenstellende Ergebnisse brachte. Vorzugsweise beträgt das Gewichtsverhältnis zwischen Rotschlamm und Kohle 1 : 1. Das Mischungsverhältnis wird auch vom Feuchtigskeitsgehalt des Rotschlammes abhängen, so dass einem Rotschlamm mit niedrigem Feuchtigkeitsgehalt weniger Kohle zuzumischen ist und umgekehrt. Anstelle von Kohlenstaub können auch feinstkörniger Koks oder eine Mischung aus Koks und Kohle verwendet werden. Auch hier dürfte die grosse innere Oberfläche des Kokses zum angestrebten Effekt, die Feuchtigkeit des Rotschlammes zu binden, beitragen.

Es war bereits erwähnt worden, dass bei Verwendung von Braunkohlenstaub dieser im allgemeinen eine Trocknung erfahren hat. Inwieweit dies bei Steinkohlenstaub notwendig ist, wird im wesentlichen von dessen Gewinnung abhängen. Im Sichter – d.h. trocken – abgeschiedener Staub wird im allgemeinen keiner Trocknung bedürfen. Hingegen kann es bei feinkörniger Steinkohle, die auf einem Filter entwässert worden ist, ebenfalls notwendig sein, den Feuchtigkeitsgehalt durch thermische Trocknung weiter zu verringern. Die vorerwähnte Mischung zwischen beispielsweise auf 12% Restfeuchte getrockneter feinstkörniger Braunkohle und Rotschlamm eignete sich beispielsweise vorzüglich für die hydrierende Behandlung der Braunkohle zum Zwecke der Kohleverflüssigung. Bei der Hydrierung von Braunkohle ist die Menge des für die Trocknung des Rotschlammes einzusetzenden Braunkohlenstaubes im Verhältnis zur insgesamt einzusetzenden Braunkohle relativ gering. Es werden 2–5% der Gesamtmenge der zu hydrierenden Kohle in Form von Braunkohlenstaub für die Vermischung mit dem Rotschlamm benötigt. Hier hat es sich beispielsweise als sehr vorteilhaft erwiesen, die Behandlung des Rotschlamms mit dem Braunkohlenstaub bereits am Ort der Entstehung des Rotschlammes vorzunehmen, so dass es nicht notwendig ist, unbehandelten Rotschlamm in den Bereich der Hydrieranlage zu bringen. Verschmutzungen werden somit in jedem Fall vermieden. Wesentlich ist dabei der bei Anwendung der Erfindung allgemein erzielbare Vorteil, dass das im resultierenden Rotschlamm-Kohle-Gemisch enthaltene Wasser bei der weiteren Handhabung in jedem Falle gebunden bleibt, welche Tatsache beispielsweise die vorerwähnte Lagerung des Gemisches in Silos ermöglicht.

Rotschlamm und Braunkohlenstaub können in unterschiedlichen Mischvorrichtungen gemischt werden. Günstige Ergebnisse wurden beispielsweise erzielt bei Verwendung eines Fluidmischers, dessen Drehzahl regelbar ist. Letzteres erlaubt die Beeinflussung der Korngrösse des Mischgutes. Mit zunehmender Mischgeschwindigkeit wird im allgemeinen die Korngrösse abnehmen. Dieser Effekt kann noch durch den Einbau von zusätzlichen Fluidisierflügeln gesteigert werden.

Es ist aber auch möglich, langsam laufende Mischgeräte zu verwenden, beispielsweise Gegenstrommischer oder Mischknetanlagen. Je nach der Konsistenz des anfallenden Rotschlammes kann es erforderlich sein, der einen oder anderen Mischanlage bzw. dem Schleuder- oder Knetverfahren den Vorzug zu geben. Üblicherweise wird der Braunkohlenstaub kontinuierlich dem Rotschlamm zugemischt. Es kann aber auch zweckmässiger sein, den Braunkohlenstaub stufenweise oder in zwei Zugaben zuzumischen.

Ggf. können die Mischanlagen auch noch zusätzlich von aussen beheizt werden, um einmal den Mischvorgang zu fördern und zum anderen eine zusätzliche Trocknung herbeizuführen. Bekanntlich besitzt der Rotschlamm thixotrope Eigenschaften, die zur Folge haben, dass er bei mechanischer Einwirkung aus seinem pastösen Zustand in einen mehr oder weniger flüssigen Zustand übergeht. Durch die Wärmezufuhr von aussen beispielsweise wird der Übergang in den flüssigen Zustand des Rotschlammes gefördert mit dem Ergebnis, dass das Vermischen mit dem Braunkohlenstaub verbessert und erleichtert wird.

Die bereits erwähnten Möglichkeiten, das Rotschlamm – Kohle – Gemisch über längere Zeit in Silos zu lagern und ggf. pneumatisch über lange Strecken zu fördern, ermöglicht den Transport der Mischung bis in die Nähe der endgültigen Verbrauchsstelle.

Weitere Merkmale und Vorteile der Erfindung ergeben sich aus der folgenden Beschreibung eines Ausführungsbeispiels.

Rotschlamm, der 5 Gew.-% $Fe_2O_3$ und etwa 55 Gew.-% Wasser enthielt, wurde mit Braunkohlenstaub mit einem Feuchtigkeitsgehalt von 12% im Verhältnis 1 : 1 der Gewichte vermischt. Die Mischzeit betrug 10–20 Minuten. Bei einer Mischzeit von 10 Minuten wurde eine gerade ausreichende Vermischung erzielt, während bei einer Mischzeit von 20 Minuten das erhaltene Produkt merklich feinkörniger war. Die Mischtemperatur lag zwischen 70 und 100°C. Es wurde in unterschiedlichen Mischgeräten sowie mit unterschiedlichen Drehzahlen gemischt. Das resultierende Produkt war ein krümeliges Gemisch von Rotschlamm und Braunkohlenstaub, welches ein trockenes Aussehen aufwies und einer Siebanalyse unterzogen wurde. Das Ergebnis derselben ist in der Tabelle angegeben.

Bei den Versuchen 1 und 2 wurde in einem Fluidmischer, Fabrikat Henschel, gemischt. Die Mischdrehzahlen von 1600 min$^{-1}$ waren verhältnismässig hoch. Beim Versuch 3 wurde ein Gegenstrommischer, Fabrikat Eirich, verwendet, der aus einem langsam laufenden Mischteller besteht, welcher entgegen der Dreheinrichtung des Rührwerks umläuft. Beim Versuch 4 wurde ein Pflugscharmischer, Fabrikat Lödige, verwendet, der Schleuder- und Wirbeleffekte aufwies. Dieser Mischer lief mit 300 min$^{-1}$ bereits schneller als der Mischer des Versuchs 3.

Beim Versuch 5 wurde auf einer Misch-Knetanlage, Fabrikat Buss, mit einer Drehzahl von 30–60 min$^{-1}$ gearbeitet. Bei dieser Anlage sind Knetgehäuse und Knetschnecke als kontinuierlich arbeitende Einrichtung ausgebildet; der Läufer führt Rotations- und Axialbewegungen aus.

In bezug auf die Korngrösse der Mischung wurden in den Versuchen 1, 2 und 5 Werte erzielt, die deutlich unter den mittleren Korngrössendurchmessern der Versuche 3 und 4 lagen. Ähnlich verhält es sich mit den Schüttdichten. Auch hier zeigte es sich, dass der Zerkleinerungsprozess unter den Bedingungen der Versuche 3 und 4 weniger weit fortgeschritten war als unter den Bedingungen der Versuche 1, 2 und 3. Im Wassergehalt der resultierenden Mischungen zeigten sich dagegen keine so deutlichen Unterschiede zwischen den einzelnen Versuchsergebnissen. Dies war auch nicht zu erwarten.

Das Ergebnis aller Versuche ist noch einmal im Mittelwert in dem beigefügten Diagramm dargestellt. Hierbei ist die Korngrösse des Mischgutes bzw. die Maschenweite des Messsiebes über den Rückstand auf dem Sieb aufgetragen. Beide Achsen sind logarithmisch unterteilt. Als Ergebnis wurde eine mittlere Kurve mit angenähert hyperbolischem Verlauf erhalten.

Mit den vorbeschriebenen Versuchen konnte eindeutig der Nachweise erbracht werden, dass Rotschlamm und Braunkohlenstaub miteinander zu einem handhabbaren Produkt vermischbar sind, welches sich zur Katalyse bei der hydrierenden Verflüssigung von Braunkohle besonders eignet. Bei der versuchsweisen Behandlung von Rotschlamm mit Steinkohlenstaub wurden vergleichbare Ergebnisse erzielt.

Tabelle

| Mischungen: | Braunkohlenstaub (Feuchtigkeitsgehalt 12%) |
| | Rotschlamm (30 bis 40 Gew. % $Fe_2O_3$, $Fe_3O_4$) |
| Mischungsverhältnis: | 1:1 Gewichte |
| Mischzeit: | 10 bis 20 Minuten |
| Mischtemperatur: | 70 bis 100 °C |

Siebanalyse

| Versuche | 1 | 2 | 3 | 4 | 5 |
|---|---|---|---|---|---|
| Drehzahl | | | | | |
| Korngrösse m $10^{-6}$ | 1600 $min^{-1}$ | 1600 $min^{-1}$ | 53 $min^{-1}$ | 300 $min^{-1}$ | 50 $min^{-1}$ |
| 2000 | 0,12 | – | 1,98 | 0,41 | 0,21 |
| 2000–1000 | 0,34 | 0,13 | 1,25 | 4,08 | 1,40 |
| 1000– 500 | 2,75 | 0,71 | 2,74 | 1,48 | 0,83 |
| 500– 315 | 5,01 | 2,07 | 3,39 | 1,54 | 2,31 |
| 315– 200 | 10,99 | 7,87 | 8,63 | 8,94 | 6,37 |
| 200– 125 | 11,95 | 11,69 | 13,03 | 15,70 | 10,40 |
| 125– 90 | 6,56 | 8,25 | 7,44 | 9,03 | 7,06 |
| 90– 63 | 5,80 | 9,13 | 9,42 | 9,91 | 8,34 |
| 63– 50 | 4,54 | 6,43 | 8,59 | 8,58 | 6,11 |
| 50– 40 | 1,86 | 3,04 | 7,09 | 6,66 | 4,50 |
| 40– 32 | 6,43 | 7,23 | 13,69 | 11,67 | 11,47 |
| 32 | 43,65 | 43,45 | 22,75 | 22,00 | 41,09 |
| mittlere Korngrösse µm | 120,9 | 93,6 | 178,5 | 176,7 | 102,6 |
| Schüttdichte g $cm^{-3}$ | 0,654 | 0,640 | 0,771 | 0,690 | 0,527 |
| Wassergehalt der Mischung Gew.-% | 23,4 | 24,6 | 27,9 | 23,4 | 26,6 |

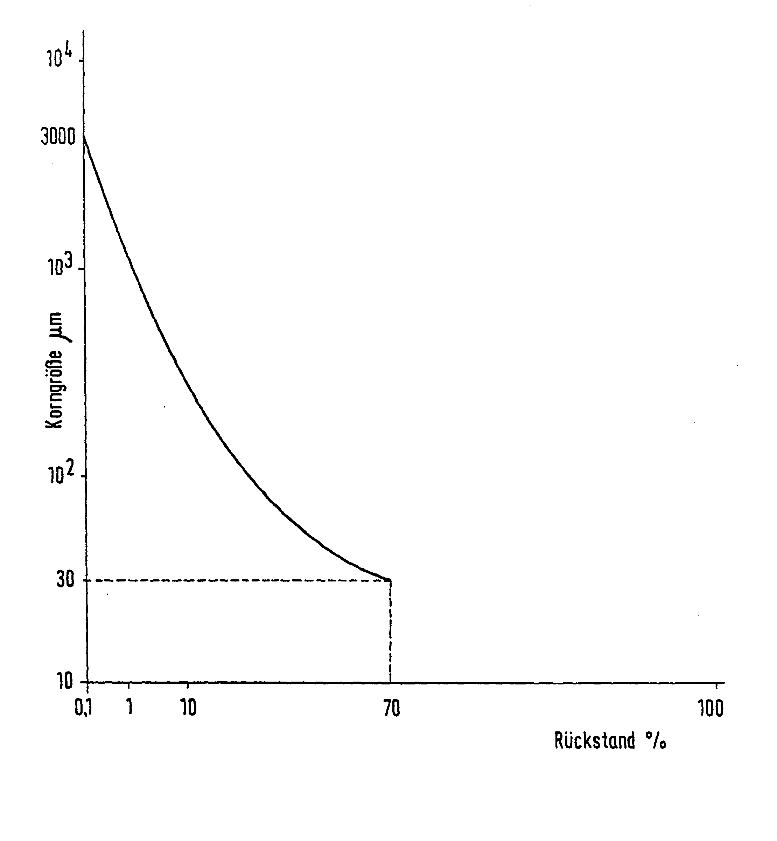

## Patentansprüche

1. Verfahren zum Behandeln von Rotschlamm mit trocknenden Substanzen zum Zwecke der weiteren Verwendung, dadurch gekennzeichnet, dass Rotschlamm bei einem Feuchtigkeitsgehalt zwischen 40 und 60 Gew.-% mit einer zur Trocknung ausreichenden Menge feingemahlener Kohle, insbesondere Kohlenstaub, und/oder feinstkörnigem Koks vermischt wird.

2. Verfahren nach Anspruch 1, dadurch gekennzeichnet, dass der Rotschlamm mit feinstkörniger Braunkohle vermischt wird.

3. Verfahren nach Ansprüchen 1 oder 2, dadurch gekennzeichnet, dass Rotschlamm mit Kohle im Verhältnis der Gewichte zwischen 0,5–10 : 1, vorzugsweise 1 : 1 vermischt wird.

4. Verfahren nach Anspruch 2, dadurch gekennzeichnet, dass Rotschlamm mit vorgetrocknetem Braunkohlenstaub vermischt wird, der auf einen Feuchtigkeitsgehalt von weniger als 20%, vorzugsweise von 12% getrocknet wurde.

5. Verfahren nach einem der Ansprüche 1 bis 4, dadurch gekennzeichnet, dass der Kohlenstaub dem Rotschlamm kontinuierlich zugemischt wurde.

6. Verfahren nach einem der Ansprüche 1 bis 5, dadurch gekennzeichnet, dass der Kohlenstaub dem Rotschlamm stufenweise, insbesondere in zwei Stufen, zugemischt wird.

7. Verfahren nach einem der Ansprüche 1 bis 6, dadurch gekennzeichnet, dass der Rotschlamm mit dem Braunkohlenstaub in einem Mischer vermischt wird, dessen Drezahl zur Erzielung einer bestimmten Korngrösse der Mischung geregelt wird.

8. Verfahren nach einem der Ansprüche 1 bis 7, dadurch gekennzeichnet, dass der Rotschlamm mit dem Braunkohlenstaub in einem Gegenstrommischer oder in einer Misch-Knetanlage vermischt wird.

9. Verfahren nach einem der Ansprüche 1 bis 8, dadurch gekennzeichnet, dass der mit dem Kohlenstaub vermischte Rotschlamm vor der weiteren Verwendung in einem Silo (zwischen) – gelagert und aus dem Silo heraus pneumatisch abgefüllt und an den Ort der Verwendung gefördert wird.

10. Verwendung des bei Anwendung des Verfahrens gemäss den Ansprüchen 1 bis 9 erhaltenen Stoffgemisches für den Einsatz bei der hydrierenden Verflüssigung von Kohle.

## Claims

1. A method of treating red mud with drying substances for the purposes of further use thereof, characterised in that red mud with a moisture content of between 40 and 60% by weight is mixed with an amount, which is sufficient for drying purposes, of finely ground coal, in particular coal dust, and/or very fine-grain coke.

2. A method according to claim 1 characterised in that the red mud is mixed with very fine-grain brown coal.

3. A method according to claim 1 or claim 2 characterised in that red mud is mixed with coal in a ratio by weight of between 0.5–10 : 1, preferably 1 : 1.

4. A method according to claim 2 characterised in that red mud is mixed with pre-dried brown coal dust which was dried to a moisture content of less than 20%, preferably 12%.

5. A method according to one of claims 1 to 4 characterised in that the coal dust is continuously admixed with the red mud.

6. A method according to one of claims 1 to 5 characterised in that the coal dust is admixed with the red mud in a stepwise manner, in particular in two steps.

7. A method according to one of claims 1 to 6 characterised in that the red mud is mixed with the brown coal dust in a mixer, the speed of rotation of which is regualted to produce a given grain size in the mixture.

8. A method according to one of claims 1 to 7 characterised in that the red mud is mixed with the brown coal dust in a counter-flow mixer or in a mixing-kneading apparatus.

9. A method according to one of claims 1 to 8 characterised in that the red mud which is mixed with the coal dust is put into (intermediate) storage in a silo before further use thereof and is pneumatically discharged from the silo and conveyed to the location of use.

10. Use of the mixture of substances obtained when using the method according to claims 1 to 9, for use in the hydrogenating liquefaction of coal.

## Revendications

1. Procédé pour traiter de la boue rouge avec des substances sèches en vue de son utilisation ultérieure, caractérisé en ce que la boue rouge avec une teneur en humidité entre 40 et 60% en poids est mélangé avec une quantité suffisante pour la dessiccation de charbon finement moulu, en particulier de la poussière de charbon, et/ou de coke de grains très fins.

2. Procédé selon la revendication 1, caractérisé en ce que la boue rouge est mélangée avec du lignite de grains très fins.

3. Procédé selon la revendication 1 ou 2, caractérisé en ce que la boue rouge est mélangée avec du charbon dans un rapport en poids entre 0,5–10 : 1, de préférence 1 : 1.

4. Procédé selon la revendication 2, caractérisé en ce que la boue rouge est mélangée avec de la poussière de lignite préséchée qui a été séchée pour avoir une teneur en humidité de moins de 20%, de préférence 12%.

5. Procédé selon l'une des revendications 1 à 4, caractérisé en ce que la poussière de charbon est mélangée de façon continue à la boue rouge.

6. Procédé selon l'une des revendications 1 à 5, caractérisé en ce que la poussière de charbon est mélangée à la boue rouge par étapes, en particulier en deux étapes.

7. Procédé selon l'une des revendications 1 à 6, caractérisé en ce que la boue rouge est mélangée avec la poussière de charbon dans un mélangeur dont la vitesse de rotation est réglée en vue d'obtenir une grandeur de grains déterminée pour le mélange.

8. Procédé selon l'une des revendications 1 à 7, caractérisé en ce que la boue rouge est mélangée avec la poussière de charbon dans un mélangeur à contre courant ou dans un mélangeur malaxeur.

9. Procédé selon l'une des revendications 1 à 8, caractérisé en ce que la boue rouge mélangée avec la poussière de charbon est entreposée dans un silo avant son utilisation ultérieure et est sortie du silo et transportée à son endroit d'utilisation de manière pneumatique.

10. Utilisation du mélange obtenu par application du procédé selon les revendications 1 à 9 pour la charge dans la liquéfaction hydrogénante du charbon.